# EUROPEAN PATENT SPECIFICATION

(11) **EP 1 461 543 B1**
(45) Date of publication and mention of the grant of the patent: **20.04.2005**
(21) Application number: 02779851.1
(22) Date of filing: 06.12.2002
(51) Int. Cl.: F16H 25/22

(54) **SCREW ACTUATOR MODULE**
KUGELGEWINDETRIEB-MODUL
MODULE D'ACTIONNEUR A VIS

(30) Priority: 07.12.2001 IT TO20011138
(43) Date of publication of application: 29.09.2004
(73) Proprietor: SKF INDUSTRIE S.P.A., 10121 Torino (IT)
(72) Inventor: VISSERS, Carl, NL-5275 BT Den Dungen (NL); ZWARTS, Koos, NL-3438 Va Nieuwegein (NL); KOLLAARD, Nico, NL-3417 EK Montfoort (NL); VAN LEEUWEN, Bernie, NL-3437 JM Nieuwegein (NL); KAPAAN, Henk, NL-3435 DM Nieuwgein (NL)
(74) Representative: Fioravanti, Corrado
(86) International application number: PCT/IB2002/005176
(87) International publication number: WO 2003/048610

(56) References cited:
- WO-A-00/02302
- WO-A-00/29764
- WO-A-01/65147
- DE-A- 19 652 230

## Description

The invention is related to a screw actuator for use in a screw actuator, corresponding to the preamble of claim 1.

Screw actuators are widely used for various purposes. Recently, attempts have been made to apply screw actuators also as a replacement for hydraulic actuators. A screw actuator has the advantage that it enables electric actuation, which means that hydraulic lines and hydraulic oil can be dispended with. Moreover, through appropriate electronic control, screw actuators can easily be adapted to specific tasks, such as wear compensation and maintenance indication.

The closest prior art document DE 196 52 230 A discloses a screw actuator module which is to be accommodated in a housing, comprising a screw mechanism with a nut and a screw, a first bearing for a motor rotor, a first bearing for rotatably supporting a motor rotor onto the nut, a second bearing for rotatably supporting the nut with respect to the housing, and lock means for preventing rotation of the screw with respect to the housing.

The object of the invention is to provide a screw actuator module which can be applied universally in several fields. It should be possible to apply such module in different housings, adapted to the envisaged field of application.

This object is achieved through a screw actuator module as defined in the appended claims.

The screw actuator module according to the invention comprises a sleeve which constitutes a universal member adapted to be fitted in a prepared housing. The advantage of such a module is that it can be pre-assembled, and that its final application involves only the proper positioning and fastening with respect to the housing in question.

To this end, the sleeve preferably has an outwardly protruding at one end, said flange serving as a support against a part of the housing surrounding a bore in the housing. The sleeve is so stably supported within the bore or cylindrical cavity. The flange is firmly urged against the corresponding housing part when applying an actuating force through the screw actuator module.

According to a first possibility, a bearing race is integrated in the sleeve; also, a bearing race is integrated in the nut. In a second possibility, the bearing has an outer ring and an inner ring which are connected to the sleeve and the nut, respectively.

In a very compact embodiment, the nut has a part which protrudes with respect to the sleeve, said protruding part supporting the rotor through one or more rolling element bearings. The protruding part of the nut may have a drive end which engages the rotor through a reduction gear mechanism.

At least one of the races of the rotor support bearing is integrated in the nut, and at least one race of the rotor supporting bearing is integrated in the rotor supporting ring. Alternatively, also in this case the rotor supporting bearing has an outer ring and an inner ring which are connected to the rotor and the nut, respectively.

In a very stable embodiment the screw engages a piston, said piston being slidably accommodated in a cylinder contained in the sleeve. The cylinder can be formed by the sleeve itself which further simplifies the module and enhances the compactness thereof. The screw can be connected to the piston, or form a unit therewith.

The invention is also related to a screw actuator comprising a screw actuator module which is accommodated in a housing, said screw actuator module comprising a screw mechanism with a nut and a screw, a motor rotor, as well as a sleeve which is supported with respect to the housing, wherein the sleeve carries a bearing by means of which the nut is rotatably supported, and lock means for preventing rotations of the screw with respect to the sleeve.

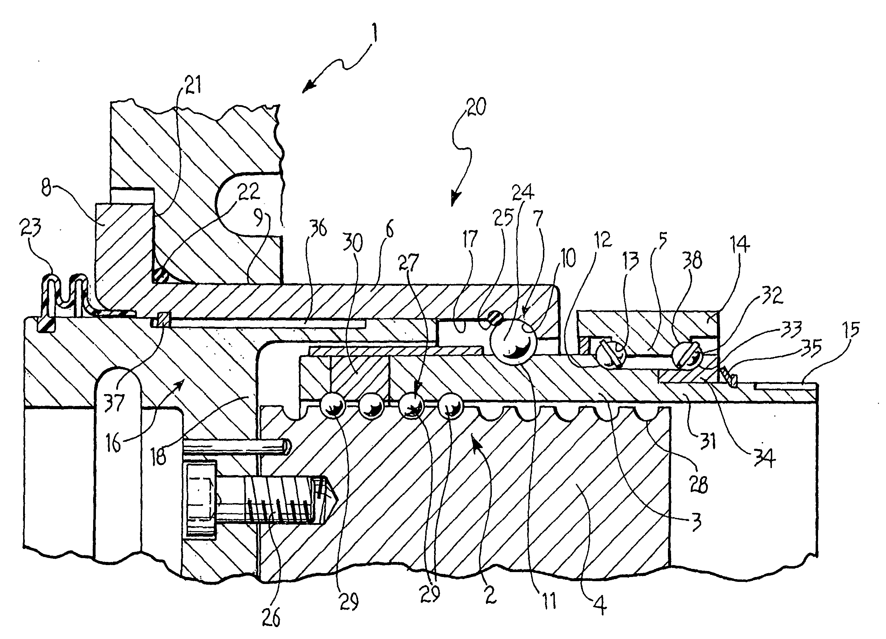

The invention will now be described in greater detail with reference to an embodiment of the screw actuator module shown in the figure. The screw actuator module according to the invention has been designated by reference numeral 20, and is accommodated in a housing 1, only part of which is shown.

The screw actuator module comprises a sleeve 6 having an outwardly extending flange 8 which rests against a housing area 21 surrounding a cylindrical cavity 9 of the housing which accommodates the sleeve 6. A seal 22 is provided so as to protect the screw actuator module against dirt, grease etc.

The sleeve 6 forms a cylinder 17 which accommodates a piston 16 which the parts to be actuated can be connected to. By means of a bellows 23, the piston 16 and cylinder 17 are protected against dirt, etc.

The sleeve 6, at its end facing away from the flange 8, protrudes out of the cylindrical cavity 9. The protruding end end carries a bearing 7 by means of which the nut 3 of a screw mechanism 2 is rotatably supported.

The bearing 7 in question has raceways 10, 11 which are integrated in the sleeve 6 and the nut 3, respectively. The balls 24 are held in position by means of a circlip 25, which is accommodated in a correspondingly shaped groove formed in the sleeve 6.

The screw 4 of the screw mechanism 2 is connected to a transversely extending wall 18 of the piston 16 by means of a screw connection 26. The piston 16 is held non-rotatably within the cylinder 17 by means of a spline 37 and a groove 36, which means that also the screw 4 is non-rotatable.

The screw and the nut have correspondingly shaped screw-shaped threads 27, 28, respectively, in which balls 29 are accommodated. Through inserts 30 accommodated in the nut 3, these balls may be transferred from neighbouring screw threads upon rotating the nut 3 with respect to the screw 4.

The nut 3 has a part 31 which protrudes with respect to the sleeve 6. This protruding part 31 of the nut 3 carries a rolling element bearing 5, comprising two sets of balls 32 and an outer ring 14. The series of balls 32 are accommodated in an integrated raceway of the nut 3, as well as in the raceway 33_of a raceway piece 34. This raceway piece 34 is held under pretension by means of a spring e.g. a Belleville washer 35. The other raceways 13 and 38 are accommodated in the outer ring 14.

The bearing 5 is intended for supporting the rotor of a preferably electric motor, not shown. The utmost end of the protruding part 31 of the nut 3 carries a toothing 15, by means of which the nut 3 can engage the motor (not shown), for instance through a gear reduction mechanism.

Although specific ball bearings are shown in the embodiment in question, also plain bearings, (axial/radial) roller bearings or a combination thereof may be applied.

The housing may consist of a metallic, non-metallic or composite material.

The screw mechanism may comprise a roller screw or a friction screw instead of the ball screw shown.

A rotation sensor may be accommodated between the stationary and rotating parts of the bearing parts or the screw mechanism parts to monitor the revolutions of the screw actuator module. Also, between the screw 4 and the piston 16 a load sensor may be accommodated, such as a liquid pressure sensor.

The outer ring 14 of the bearing 5 may be separated from the rotor of the motor, as shown, or may be integrated therewith.

The screw actuator module as a whole can be self-contained, and lubricated and sealed for life. Furthermore, the bearing can be shielded or sealed for life.

Elements can be incorporated between the flange 8 and the housing 1 to protect/block the screw actuator module with respect to external heat. Also the external face of the piston 16 may contain such elements.

The sleeve can be made of a metallic, non-metallic or composite material. The sleeve may also be obtained by powder forming. Alternatively, the sleeve can be made of a powder material, and can be hardened, hard turned, or whirled so as to obtain the final dimensioning and the required surface roughness. Other components of the screw actuator module can also be made of such a powder material, e.g. the nut, the screw, the piston, the outer ring of the rotor bearing etc. The piston itself can also be made of a non-metallic or composite material.

The flange 8 may contain holes for mounting and fixation thereof with respect to the housing.

The rotor of the motor may be formed as a unity with the support bearing outer ring 14.

## Claims

1. A screw actuator module which is to be accommodated in a housing (1), the module comprising
a screw mechanism (2) with a rotatable nut (3) and a screw (4),
a first bearing (5) for rotatably supporting a motor rotor onto the nut (3),
a sleeve (6) which is to be supported with respect to the housing (1),
lock means (36, 37) for preventing rotation of the screw (4) with respect to the sleeve (6), **characterized in that** said sleeve (6) carrying a second bearing (7) by means of which the nut (3) is rotatably supported, wherein the sleeve (6)
- forms a cylinder (17) for slidably accommodating a piston (16) connected to said screw (4),
- integrates a bearing race (10) of said second bearing (7), and
- has at one end an outwardly protruding flange (8) for resting against a part of the housing (1) surrounding a cylindrical bore (9) in the housing (1).

2. A screw actuator module according to claim 1, wherein the piston (16) is held non-rotatably within the cylinder (17) by said lock means (36, 37).

3. A screw actuator module according to claim 1, wherein the screw (4) is connected to a transverse wall (18) of the piston (16).

4. A screw actuator comprising a housing (1) accommodating a screw actuator module according to any one of the preceding claims.

## Patentansprüche

1. Schneckenstellglied-Modul, das in einem Gehäuse (1) untergebracht werden kann, wobei das Modul enthält:
einen Schneckenmechanismus (2) mit einer drehbaren Mutter (3) und einer Schnecke (4),
ein erstes Lager (5), um den Rotor eines Motors auf der Mutter (3) drehbar zu lagern,
eine Buchse (6), die im Hinblick auf das Gehäuse (1) gehalten werden soll,
eine Verriegelungseinrichtung (36, 37), um eine Drehung der Schnecke (4) im Hinblick auf die Buchse (6) zu verhindern,
**dadurch gekennzeichnet, dass** die Buchse (6) ein zweites Lager (7) trägt, in dem die Mutter (3) drehbar gelagert ist,
wobei die Buchse (6)
- einen Zylinder (17) bildet, um einen Kolben (16) verschiebbar aufzunehmen, der mit der Schnecke (4) verbunden ist,
- eine Laufbahn (10) des zweiten Lagers (7) integriert und
- an einem Ende einen nach außen vorspringenden Flansch (8) besitzt, der an einem Teil des Gehäuses (1) aufliegt, der eine zylindrische Bohrung (9) im Gehäuse (1) umgibt.

2. Schneckenstellglied-Modul gemäß Anspruch 1, wobei der Kolben (16) im Zylinder (17) von der Verriegelungseinrichtung (36, 37) so gehalten wird, dass er sich nicht drehen kann.

3. Schneckenstellglied-Modul gemäß Anspruch 1, wobei die Schnecke (4) mit einer Querwand (18) des Kolbens (16) verbunden ist.

4. Schneckenstellglied, das ein Gehäuse (1) enthält, das ein Schneckenstellglied-Modul gemäß irgendeinem der bisherigen Ansprüche aufnimmt.

## Revendications

1. Module d'actionneur à vis destiné à être accueilli dans un carter (1), le module comprenant
un mécanisme de vis (2) avec un écrou tournant (3) et une vis (4),
un premier palier (5) pour supporter à rotation un rotor de moteur sur l'écrou (3),
un manchon (6) qui est destiné à être supporté par rapport au carter (1),
des moyens de verrouillage (36, 37) pour empêcher la rotation de la vis (4) par rapport au manchon (6), **caractérisé en ce que** ledit manchon (6) supporte un second palier (7) au moyen duquel l'écrou (3) est supporté à rotation, dans lequel le manchon (6) :
forme un cylindre (17) pour accueillir de manière coulissante un piston (16) connecté à ladite vis (4),
intègre une piste de palier (10) dudit second palier (7), et
a au niveau d'une extrémité un rebord (8) faisant saillie vers l'extérieur destiné à reposer contre une partie du carter (1) entourant un alésage cylindrique (9) dans le carter (1).

2. Module d'actionneur à vis selon la revendication 1, dans lequel le piston (16) est maintenu de manière non à rotation dans le cylindre (17) par lesdits moyens de verrouillage (36, 37).

3. Module d'actionneur à vis selon la revendication 1, dans lequel la vis (4) est connectée à une paroi transversale (18) du piston (16).

4. Actionneur à vis comprenant un carter (1) accueillant un module d'actionneur à vis selon l'une quelconque des revendications précédentes.
